# EUROPÄISCHE PATENTSCHRIFT

(11) **EP 2 056 346 B1**
(45) Veröffentlichungstag und Bekanntmachung des Hinweises auf die Patenterteilung: **22.07.2015**
(21) Anmeldenummer: 08018768.5
(22) Anmeldetag: 28.10.2008
(51) Int. Cl.: H01L 23/58, G06F 21/00, H01L 23/31, G06K 19/073, G06K 19/077

(54) **Halbleiterchip mit einer Schutzschicht**
Semi-conductor chip with a protective layer
Puce semi-conductrice dotée d'une couche de protection

(30) Priorität: 30.10.2007 DE 102007051788
(43) Veröffentlichungstag der Anmeldung: 06.05.2009
(73) Patentinhaber: Giesecke & Devrient GmbH, 81677 München (DE)
(72) Erfinder: Finkenzeller, Klaus, 85774 Unterföhring (DE); Baldischweiler, Michael, 81825 München (DE); Stocker, Thomas, 81739 München (DE)

(56) Entgegenhaltungen:
- EP-A2- 1 223 545
- WO-A1-97/36326
- WO-A2-03/046986
- WO-A2-2007/086046
- DE-A1- 10 065 339
- DE-A1- 19 738 990
- DE-C1- 19 639 033
- FR-A1- 2 872 610
- US-A1- 2001 033 012
- US-B1- 7 024 565

## Beschreibung

Die Erfindung betrifft allgemein das technische Gebiet der integrierten Schaltungen und insbesondere das Gebiet der Sicherung eines Halbleiterchips gegen Angriffe.

Mikrocontroller und andere Halbleiterchips mit komplexen Funktionen werden für eine Vielzahl sicherheitskritischer Anwendungen eingesetzt, beispielsweise bei Finanztransaktionen oder bei der Zugangskontrolle oder bei der elektronischen Verschlüsselung oder Signatur von Dokumenten. Bei derartigen Anwendungen kann durch eine unbefugte Ausspähung oder Manipulation der im Chip gespeicherten Daten bzw. der durch den Chip ausgeführten Verfahren hoher Schaden entstehen. Besonders gefährdet sind Chips, die sich im unüberwachten Besitz des Anwenders befinden, wie dies z.B. bei Chipkarten (*Smart Cards*) oder Chipmodulen oft der Fall ist.

Es sind diverse Angriffsverfahren zur Ausspähung und/ oder Manipulation von Mikrocontrollern und anderen Halbleiterchips bekannt. Eine an sich bekannte Klasse von Angriffen sind so genannte Fehlerangriffe (*Fault Attacks*), bei denen die Programmausführung und/ oder der Speicherinhalt eines Halbleiterchips durch externe Einwirkung gestört wird. Beispielsweise wird bei einem so genannten Lichtangriff intensives Licht auf den freigelegten Halbleiterchip gestrahlt. Die dadurch bewirkte Störung der regulären Chipfunktion kann die Sicherheit der vom Halbleiterchip ausgeführten Verfahren bzw. der auf dem Chip gespeicherten Daten kompromittieren, wenn z.B. der Chip als Folge der Lichteinstrahlung fehlerhaft verschlüsselte Daten ausgibt, deren Analyse Rückschlüsse auf einen geheimen Schlüssel zuläßt.

EP 1429 227 A2 zeigt einen Mikrocontroller für eine Chipkarte, bei dem Lichtsensoren in ein Speicherfeld integriert sind. Wenn ein Lichtsensor eine irreguläre Lichteinstrahlung erkennt, können beispielsweise interne Aktionen des Mikrocontrollers gestoppt werden. Teile der Lichtsensoren sind mit einer Metallschicht abgedeckt.

WO 00/11719 A1 beschreibt einen Halbleiterchip mit einer elektrisch leitenden Schutzschicht, die mit einem elektrischen Schutzsensor verbunden ist. Der Schutzsensor vermag eine Manipulation des Halbleiterchip durch ein FIB-Verfahren (FIB = *focused ion beam*) aufgrund der dabei in der Schutzschicht hervorgerufenen elektrischen Spannung zu erkennen.

WO 2006/058510 A1 offenbart einen Halbleiterchip mit einer Passivierungsschicht, die aus einem Polymer mit eingebetteten mineralisch-keramischen Nanopartikeln besteht. Durch diese Ausgestaltung soll die Wärmeübertragung von dem Halbleiterchip auf ein angrenzendes Kunststoffgehäuse verbessert werden.

EP 1410 319 B1 offenbart einen tragbaren Datenträger mit einer Sicherheitseinrichtung. Die Sicherheitseinrichtung sendet ein Sicherheitssignal, das von einem im Körper des Datenträgers integrierten Beeinflussungsmittel beeinflusst wird. Wenn keine korrekte Beeinflussung erkannt wird, sperrt ein Sperrmittel einen sicherheitskritischen Betriebszustand.

Bei einem Halbleiterchip mit Lichtsensoren - wie z.B. dem oben bereits gewürdigten Mikrocontroller gemäß EP 1429 227 A2 - besteht das Problem, daß aus wirtschaftlichen und praktischen Gründen die Anzahl und Dichte der Lichtsensoren beschränkt ist. Ein Angreifer kann daher möglicherweise einen ausreichend fein fokussierten Lichtstrahl an den Lichtsensoren vorbei auf andere kritische Teile des Mikrocontrollers richten und somit einen erfolgreichen Lichtangriff ausführen.

Aus der DE 198 55 209 A1 ist ein Vorschlag zur Abwehr von Angriffen auf eine mit einem Gehäuse umgebene elektronische Baugruppe bekannt, die sensible Daten trägt. Vorgeschlagen wird, die Baugruppe mit einer Schutzhülle zu umgeben und innerhalb dieser eine Überwachungseinheit anzuordnen, die über Sensoren verfügt, um eine physikalische Eigenschaft der Schutzhülle zu erfassen und zu kontrollieren. Bei der überwachten physikalischen Eigenschaft kann es sich insbesondere um eine zufallsbedingte Verteilung von Festkörpern im Matrixmaterial der Schutzhülle handeln. Die Überwachung erfolgt z.B. optisch mittels Leuchtdioden oder eines Lasers, die mit Fototransistoren zusammenwirken. Mittels der Überwachungseinrichtung wird ein individuelles Identifikationsmerkmal erfaßt und in einem Speicher der Baugruppe hinterlegt. Im Regelbetrieb wird das Merkmal kontinuierlich oder periodisch erneut erfaßt und mit dem gespeicherten Wert verglichen.

Ferner ist aus der WO 2007/086046 A2 ein vor einem Angriff geschützter Chip bekannt, der an einer ersten Seite mit einer ersten Antenne versehen ist, wobei die erste Antenne mit einer Signalerzeugungseinrichtung verbunden ist.

Aus der US 2001/0033012 A1 ist weiterhin ein Chip mit einer Schutzschicht bekannt, die mit Partikeln versehen werden kann. Diese Partikel können mit von einer Lichtquelle ausgesendetem Licht zusammenwirken.

Die Erfindung hat demgemäß die Aufgabe, eine Technik bereitzustellen, die es ermöglicht, einen Lichtangriff auf einen mit mindestens einem Lichtsensor ausgestatteten Halbleiterchip mit hoher Sicherheit zu erkennen.

Erfindungsgemäß wird diese Aufgabe ganz oder zum Teil gelöst durch ein Halbleiterbauteil mit den Merkmalen des Anspruchs 1. Die abhängigen Ansprüche betreffen optionale Merkmale einiger Ausgestaltungen der Erfindung.

Gemäß der Anmeldung wird u.a. offenbart, eine Schutzschicht für den Halbleiterchip vorzusehen, die als Diffusor für in die Schutzschicht einfallendes Licht ausgebildet ist. Von außen einfallendes Licht wird somit, selbst wenn es nur punktförmig auf die Schutzschicht auftrifft, durch die Schutzschicht flächig verteilt. Je nach den optischen Eigenschaften der Schutzschicht und der Anzahl und Verteilung der Lichtsensoren wird damit sichergestellt oder zumindest die Wahrscheinlichkeit erhöht, daß ein gerichteter Lichtangriff von dem Lichtsensor oder zumindest einem der Lichtsensoren erkannt wird. Der Lichtsensor kann daraufhin eine geeignete Sicherheitsfunktion aktivieren, also z.B. die integrierte Schaltung in einen Ruhezustand versetzen oder eine Datenausgabe unterdrücken.

In der Wortwahl des vorliegenden Dokuments soll unter Licht jede elektromagnetische Strahlung verstanden werden, die zur Ausführung eines Lichtangriffs geeignet ist, also insbesondere sichtbares Licht sowie Ultraviolett- und Infrarot-Licht.

Die integrierte Schaltung des Halbleiterchips stellt Funktionen eines Prozessors und/ oder eines Speichers bereit. Dies heißt jedoch weder, daß die Schaltung keine anderen Funktionen aufweisen darf, noch, daß die Schaltung alle Funktionen eines Prozessors oder Speichers bieten muss. Insbesondere kann es sich bei der Schaltung um einen Mikrocontroller handeln, der beispielsweise zur Verwendung in Chipkarten oder Chipmodulen vorgesehen ist.

Die Funktion der Schutzschicht als Diffusor kann auf jedem beliebigen physikalischen Effekt beruhen. In vielen Ausführungsbeispielen wird das in die Schutzschicht einfallende Licht hauptsächlich gestreut; es kann jedoch in anderen Ausgestaltungen auch gebrochen und/ oder gebeugt und/ oder reflektiert und/ oder durch eine Interferenz abgelenkt werden.

Allgemein kann die Diffusionswirkung der Schutzschicht durch beliebige optisch aktive Flächen oder Bereiche hervorgerufen werden, beispielsweise durch mindestens eine Grenzfläche - z.B. eine Oberfläche der Schutzschicht oder eine Grenzfläche im Inneren der Schutzschicht - oder durch Einschlüsse - z.B. kleine Hohlräume - in der Schutzschicht. In vielen Ausgestaltungen sind in der Schutzschicht Partikel vorgesehen. Solche Partikel können beispielsweise aus Glas oder einem anderen geeigneten Material bestehen.

In manchen Ausgestaltungen sind die Partikel sogenannte Nanopartikel. Beispielsweise kann der durchschnittliche mittlere Durchmesser der Partikel zwischen 1 nm und 1000 nm oder zwischen 1 nm und 100 nm betragen. In manchen Ausführungsformen sind die Partikel hinsichtlich Material und Größe so ausgebildet, daß sie in einer klaren Schutzschicht mit bloßem Auge nicht sichtbar sind. Dies ist z.B. bei Nano-Glaspartikeln in der Regel der Fall.

Die als Diffusor wirkende Schutzschicht kann prinzipiell jede Schicht oder Kombination von Schichten sein, die den Halbleiterchip ganz oder teilweise bedeckt. Vorzugsweise wirkt die bei Halbleiterchips übliche Passivierungsschicht auch als Diffusor-Schutzschicht.

In manchen Ausführungsformen ist eine aktive Überwachung der Schutzschicht vorgesehen. Hierzu kann der Halbleiterchip beispielsweise mindestens eine Lichtquelle aufweisen, wobei das von der Lichtquelle in die Schutzschicht eingestrahlte Licht dort diffus zu mindestens einem Lichtsensor geleitet wird. Hierdurch lassen sich in manchen Ausgestaltungen Kenndaten über die Lichtleiteigenschaften der Schutzschicht bestimmen, die als individuelles Merkmal des einzelnen Halbleiterchips oder als generisches Merkmal einer Serie von Halbleiterchips verwendet werden können.

Die Erfindung umfasst ein Halbleiterbauteil mit einem Halbleiterchip, der zumindest zum Teil von Vergußmasse umgeben ist. Die Vergußmasse weist Partikel auf, die bei einer Hochfrequenz-Einstrahlung in Resonanz geraten. Eine Überwachungsschaltung ist dazu eingerichtet, ein Hochfrequenz-Sendesignal zu erzeugen und die durch dieses Sendesignal hervorgerufene Resonanz der Partikel zu messen. Bei derartigen Ausgestaltungen läßt sich eine an der Vergußmasse vorgenommene Manipulation zuverlässig erkennen, so daß z.B. eine geeignete Sicherheitsfunktion aktiviert werden kann.

Der tragbare Datenträger ist in manchen Ausführungsformen als Chipkarte *(Smart Card*) oder Chipmodul (z.B. als SIM oder MMC oder RFID-Tag oder Schlüsselgriff) ausgebildet.

Weitere Merkmale, Vorteile und Aufgaben der Erfindung gehen aus der folgenden genauen Beschreibung mehrerer Ausführungsbeispiele und Ausführungsvarianten hervor. Es wird auf die schematischen Zeichnungen verwiesen, in denen zeigen:
Fig. 1 einen Querschnitt durch einen Halbleiterchip,
Fig. 2 eine Draufsicht auf einen Halbleiterchip in einem abgewandelten Ausführungsbeispiel,
Fig. 3 einen Querschnitt entlang der Linie III - III in Fig. 2,
Fig. 4 einen Querschnitt durch ein Halbleiterbauteil nach einem erfindungsgemäßen Ausführungsbeispiel,
Fig. 5 eine vergrößerte schematische Darstellung einer Überwachungsschaltung in dem Ausführungsbeispiel von Fig. 4,
Fig. 6 eine schematische Darstellung eines komplexen Merkmals des Halbleiterbauteils in dem erfindungsgemäßen Ausführungsbeispiel von Fig. 4 und Fig. 5, und
Fig. 7 eine schematische Darstellung einer weiteren Überwachungsschaltung zur Überwachung der Kapazität einer umhüllenden Vergußmasse.

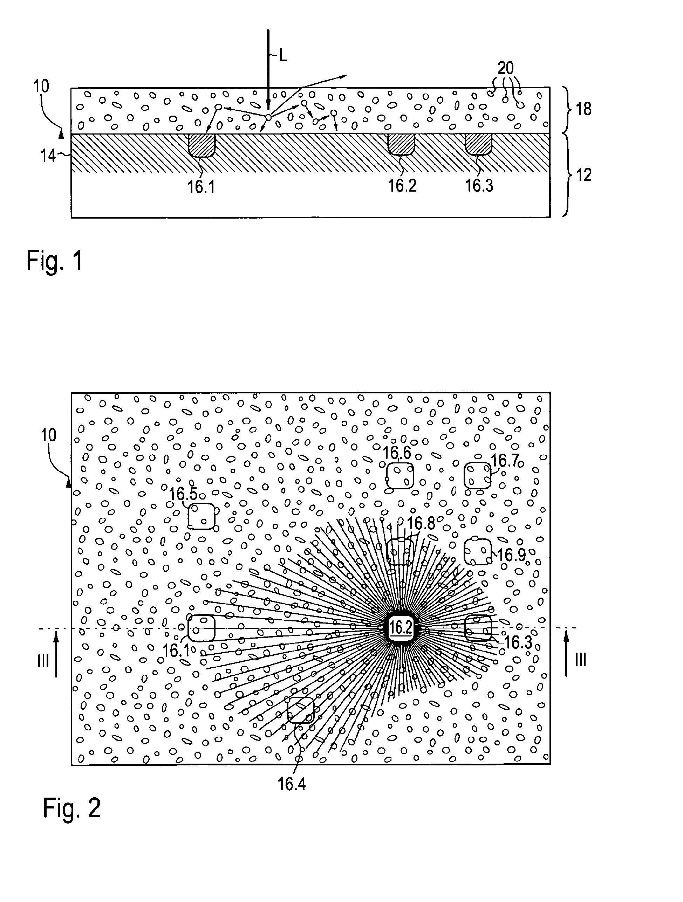

In Fig. 1 ist ein Halbleiterchip 10 gezeigt, der im vorliegenden Ausführungsbeispiel zur Verwendung in einem tragbaren Datenträger - z.B. in einer Chipkarte oder einem Chipmodul - vorgesehen ist. Der Hableiterchip 10 weist ein beispielsweise aus Silizium gefertigtes Substrat 12 auf, in dem in an sich bekannter Weise eine integrierte Schaltung 14 ausgebildet ist. Im vorliegenden Ausführungsbeispiel bildet die integrierte Schaltung 14 einen Mikrocontroller, der einen Prozessorkern und mehrere in unterschiedlichen Technologien ausgestaltete Speicherfelder - z.B. ROM, RAM und EEPROM - aufweist.

In dem Halbleiterchip 10 sind ferner Lichtsensoren 16.1, 16.2, 16.3, ... ausgebildet, die im folgenden zusammenfassend mit 16.x bezeichnet werden. Die Lichtsensoren 16.x sind in dem in Fig. 1 gezeigten Ausführungsbeispiel in der Fläche der integrierten Schaltung 14 räumlich verteilt angeordnet. Die Anzahl der Lichtsensoren 16.x und ihre Anordnung kann in unterschiedlichen Ausgestaltungen unterschiedlich gewählt werden; im Extremfall kann ein einziger Lichtsensor ausreichen.

Jeder der Lichtsensoren 16.x ist dazu eingerichtet, einfallendes Licht zu erkennen. Übersteigt die Stärke des einfallenden Lichts einen vorgegebenen Schwellwert, so wird ein Lichtangriff vermutet. Der Lichtsensor 16.x aktiviert dann eine Sicherheitsfunktion der integrierten Schaltung 14. Je nach den Funktionen der integrierten Schaltung 14 kann diese Sicherheitsfunktion beispielsweise bewirken, daß ein Speicherbereich gelöscht wird, oder daß eine Hardware-Unterbrechung (*Interrupt*) ausgelöst wird oder ein Speicherbit (*Flag*) gesetzt wird. Wenn es sich bei der integrierten Schaltung 14 um einen Mikrocontroller handelt, kann dieser in Reaktion auf die Lichtangriffserkennung beispielsweise ein gerade ausgeführtes Programm abbrechen oder in eine Endlosschleife springen oder geplante Ausgaben unterdrücken.

Der in Fig. 1 gezeigte Halbleiterchip 10 ist durch eine Schutzschicht 18 abgedeckt ist, die als Diffusor für in die Schutzschicht 18 einfallendes Licht wirkt. Bei der Schutzschicht 18 handelt es sich vorzugsweise um die Passivierungsschicht, mit der der Halbleiterchip 10 standardmäßig überzogen wird, um die sonst praktisch sofort eintretende Oxidation der Schaltungsstrukturen zu vermeiden. Die Passivierungsschicht 18 hat in der Regel eine Stärke von maximal 10 µm. In der Passivierungsschicht 18 befinden sich Glaspartikel in Nanometer-Größe; einige dieser Partikel sind in Fig. 1 mit dem Bezugszeichen 20 gezeigt.

In einer alternativen Ausführungsform braucht die Schutzschicht 18 nicht notwendigerweise die Passivierungsschicht selbst zu sein, sondern kann zusätzlich zu einer herkömmlichen Passivierungsschicht vorgesehen sein. Die Schutzschicht 18 braucht dann nicht notwendigerweise die gesamte integrierte Schaltung 14 zu bedecken, sondern kann auf kritische Bereiche beschränkt sein. Ferner kann die Schutzschicht 18 in manchen Ausgestaltungen ihrerseits mehrere übereinander angeordnete Teilschichten und/ oder mehrere nebeneinander angeordnete Bereiche aufweisen.

In Fig. 1 ist ein gebündelter Lichtstrahl L - beispielsweise ein kohärenter Laserstrahl - gezeigt, der von außen, d.h. von der von der Schaltung 14 abgewandten Seite, auf den Halbleiterchip 10 gerichtet ist und in die Schutzschicht 18 eindringt. Bei einem Halbleiterchip nach dem Stand der Technik, der eine klare Passivierungsschicht aufweist, würde der Lichtstrahl L die Passivierungsschicht durchdringen und auf die Oberfläche der integrierten Schaltung 14 auftreffen. Da der Lichtstrahl L in diesem Fall an der Auftreffstelle nach wie vor gebündelt wäre, ist nicht sicher, ob einer der Lichtsensoren 16.x ansprechen würde.

Bei dem in Fig. 1 gezeigten Ausführungsbeispiel wird der Lichtstrahl L dagegen an den Partikeln 20 in unterschiedliche Richtungen abgelenkt, also beispielsweise gestreut. Das sich somit in der Schutzschicht 18 ergebende Streulicht ist in Fig. 1 durch dünne Pfeile dargestellt. Der ursprünglich gebündelte Lichtstrahl L wird dadurch flächenmäßig aufgeweitet, so daß er zumindest einen der Lichtsensoren 16.x - in Fig. 1 beispielsweise den Lichtsensor 16.1 - erreicht. Die Sicherheitsfunktion des Halbleiterchips 10 wird somit auch im Falle eines Lichtangriffs mit einem gebündelten Lichtstrahl L zuverlässig aktiviert.

Die entscheidende Eigenschaft der Schutzschicht 18 ist ihre Diffusionswirkung für in die Schutzschicht 18 einfallendes Licht. Diese Wirkung wird im oben beschriebenen Ausführungsbeispiel durch die Partikel 20 in der ansonsten klaren Schutzschicht 18 erreicht, wobei die Partikel 20 eine Größe von beispielsweise 1 nm - 100 nm aufweisen und mit bloßem Auge nicht sichtbar sind. In Ausführungsvarianten können jedoch andere Mittel zum Erzielen der gewünschten Diffusionswirkung vorgesehen sein, z.B. eine raue Grenzfläche oder Einschlüsse in der Schutzschicht 18. Die Diffusion kann prinzipiell auf beliebigen physikalischen Effekten, beispielsweise einer Streuung und/ oder Brechung und/ oder Beugung und/ oder Reflexion und/ oder Interferenz beruhen.

Insgesamt ergibt sich bei dem in Fig. 1 gezeigten Ausführungsbeispiel - je nach dem Grad der Diffusionswirkung und der Dicke der Schutzschicht 18 - eine besonders zuverlässige Lichtangriffserkennung und/oder eine Einsparung hinsichtlich der Anzahl der benötigten Lichtsensoren 16.x.

In dem vorbeschriebenen Ausführungsbeispiel besteht die theoretische Möglichkeit, daß ein Angreifer die Schutzschicht 18 durch chemische Mittel entfernt, bevor der Lichtangriff ausgeführt wird. Ein solcher Angriff ist jedoch aüßerst schwierig, wenn die Schutzschicht 18 zugleich auch als Passivierungsschicht fungiert, weil in diesem Fall die freigelegte integrierte Schaltung 14 dem Luftsauerstoff ausgesetzt wäre und damit in kurzer Zeit funktionsunfähig werden würde.

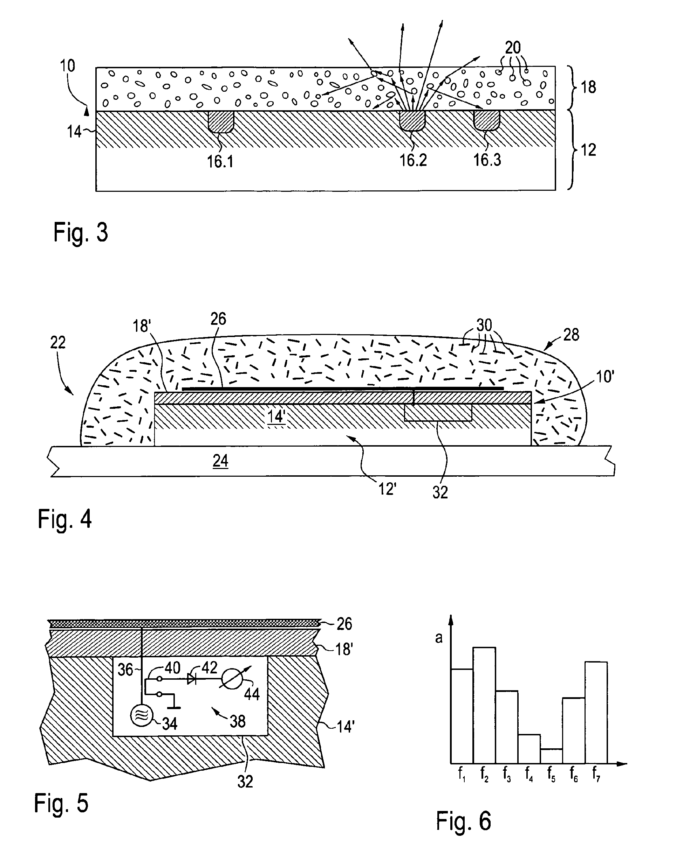

In dem in Fig. 2 und Fig. 3 gezeigten Ausführungsbeispiel wird die gerade beschriebene Angriffsmöglichkeit durch eine aktive Überwachung der Schutzschicht 18 verhindert. Hierzu wird zumindest einer der Lichtsensoren 16.x - z.B. der Lichtsensor 16.2 - als Lichtquelle betrieben. Das von dieser Lichtquelle in die Schutzschicht 18 eingestrahlte Licht wird, wie in Fig. 3 gezeigt, von den Partikeln 20 gestreut oder auf sonstige Weise in diffuses Licht umgewandelt. Ein Teil dieses diffusen Lichts trifft auf andere Lichtsensoren 16.x, z.B. den Lichtsensor 16.3 in Fig. 3. Offensichtlich tritt dieser Effekt nicht auf, wenn die Schutzschicht 18 entfernt worden ist. Der Effekt kann daher zur Überwachung der Schutzschicht 18 und zur Erkennung des oben beschriebenen Angriffs verwendet werden.

In unterschiedlichen Ausführungsformen können einige oder alle Lichtsensoren 16.x so ausgestaltet sein, daß sie wahlweise auch als Lichtquellen verwendbar sind. Es sind jedoch auch Ausführungsformen möglich, in denen eine oder mehrere Lichtquellen als separate Bauteile - zusätzlich zu den Lichtsensoren 16.x - vorgesehen sind.

Das Ausmaß der diffusen Lichtleitung in der Schutzschicht 18 hängt von den Eigenschaften der Schutzschicht 18 - insbesondere ihrer Dicke und der zufälligen Verteilung der darin enthaltenen Partikel 20 - ab. Wenn in einer Ausführungsform eine Schutzschicht 18 mit besonders guten und gleichförmigen Diffusionseigenschaften verwendet wird, ist es ein Merkmal aller Halbleiterchips 10 dieser Ausführungsform, daß ein von einer Lichtquelle ausgesandter Lichtimpuls von allen anderen Lichtsensoren 16.x erkannt wird. Das Vorhandensein dieses Merkmals kann durch ein für alle Halbleiterchips 10 fest vorgegebenes Verfahren überprüft werden, bei dem z.B. der Reihe nach jeder der Lichtsensoren 16.x als Lichtquelle aktiviert wird und überprüft wird, ob alle anderen Lichtsensoren 16.x den Lichtimpuls empfangen.

In anderen Ausgestaltungen weist die Schutzschicht 18 weniger gute, aber für alle Halbleiterchips 10 ungefähr gleiche Diffusionseigenschaften auf. Auch in diesem Fall kann ein fest vorgegebenes Verfahren zum Erkennen von Manipulationen an der Schutzschicht 18 verwendet werden. Bei diesem Verfahren wird beispielsweise überprüft, ob ein von einer Lichtquelle ausgestrahlter Lichtimpuls zumindest von den der Lichtquelle jeweils am nächsten liegenden Lichtsensoren 16.x empfangen wird.

Ferner sind Ausgestaltungen möglich, bei denen die Diffusionseigenschaften der Schutzschicht 18 für jeden Halbleiterchip 10 individuell unterschiedlich sind. Dies kann beispielsweise durch eine zufällige und relativ ungleichmäßige Verteilung der Partikel 20 in der Schutzschicht 18 bewirkt werden. So erstreckt sich z.B. das in Fig. 2 gezeigte Streulicht innerhalb der Schutzschicht 18 nicht gleichmäßig in alle Richtungen von dem als Lichtquelle wirkenden Lichtsensor 16.2, sondern breitet sich in Richtung zum Lichtsensor 16.1 weiter als in Richtung zum Lichtsensor 16.3 aus.

Derartige ungleichmäßige Diffusionseigenschaften der Schutzschicht 18 werden in manchen Ausführungsformen zur Ermittlung eines Merkmals verwendet, das für den jeweiligen Halbleiterchip 10 individuell ist. Weil dieses Merkmal beispielsweise auf der zufälligen Verteilung der Partikel 20 in der Schutzschicht 18 beruht, ist es nicht duplizierbar. In unterschiedlichen Ausgestaltungen kann das individuelle Merkmal z.B. zur Erkennung von Manipulationen an der Schutzschicht 18 und/ oder als Sicherheitsmerkmal zur Identifikation des Halbleiterchips 10 verwendet werden.

Um das individuelle Merkmal zu bestimmen, werden die vorhandenen Lichtquellen - z.B. einer oder mehrere der Lichtsensoren 16.x - der Reihe nach aktiviert, und das jeweils von den anderen Lichtsensoren 16.x empfangene Streulicht wird gemessen. Hierbei kann eine binäre Messung - also ein Vergleich mit einem vorgegebenen Schwellwert - oder eine Messung in mehr als zwei - beispielsweise 16 oder 256 - Stufen erfolgen. Die so ermittelten Messwerte oder Streulichtstärken für die einzelnen Lichtquellen ergeben Kenndaten, die für die Diffusionseigenschaften der Schutzschicht 18 charakteristisch sind. Diese Kenndaten können gespeichert, mit vorab ermittelten und gespeicherten Kenndaten verglichen, oder unmittelbar weiterverwendet werden.

Wenn die Kenndaten zur Erkennung von Manipulationen der Schutzschicht 18 verwendet werden sollen, müssen Referenzwerte vorliegen, die beispielsweise bei der Herstellung des Halbleiterchips 10 oder bei der Initialisierung oder Personalisierung ermittelt werden. Diese Referenzwerte werden im Halbleiterchip 10 unveränderlich gespeichert. Während des späteren Betriebs des Halbleiterchips 10 werden aktuelle Kenndaten nach dem oben beschriebenen Verfahren ermittelt und mit den gespeicherten Werten verglichen. In manchen Ausgestaltungen werden bei dem Vergleich zulässige Abweichungen der gemessenen Werte - die z.B. durch Alterung oder Spannungsschwankungen hervorgerufen werden können - berücksichtigt.

Wenn die gespeicherten Kenndaten und die aktuell ermittelten Werte identisch sind oder sich nur in geringem Maße unterscheiden, kann eine Manipulation der Schutzschicht 18 mit hoher Wahrscheinlichkeit ausgeschlossen werden. Falls dagegen eine erhebliche Abweichung auftritt, wird eine Sicherheitsfunktion - z.B. eine der oben bereits genannten Funktionen - aktiviert.

Statt oder zusätzlich zu der gerade beschriebenen Nutzung des individuellen Merkmals zur Manipulationserkennung können die Kenndaten zur eindeutigen Identifikation des Halbleiterchips 10 verwendet werden. Beispielsweise können die jeweils aktuell ermittelten Kenndaten in die Berechnung eines geheimen Schlüssels oder eines Kennworts oder einer Signatur des Halbleiterchips 10 eingehen. Hierzu können z.B. die Kenndaten mit einer für den Halbleiterchip 10 individuellen Seriennummer verknüpft werden. Auch hier werden vorzugsweise geeignete Vorkehrungen getroffen - z.B. eine fehlerkorrigierende Prüfsumme -, um leichte Variationen der jeweils gemessenen Werte auszugleichen. Insgesamt ergibt sich somit ein Sicherheitsmerkmal des Halbleiterchips 10, das mit dem MM-Modul einer Kunststoffkarte vergleichbar ist.

Die Grundidee der Ausgestaltung gemäß Fig. 2 und Fig. 3 ist somit, daß der Halbleiterchip 10 Licht ausstrahlt und die Wechselwirkung dieses Lichts mit der Schutzschicht 18 überwacht wird. In weiteren Ausführungsformen der Erfindung wird diese Grundidee dadurch variiert, daß nicht Licht, sondern elektromagnetische Wellen in einem anderen Frequenzbereich ausgestrahlt werden, und daß die Wechselwirkung dieser Wellen mit Partikeln in einer Vergußmasse überwacht wird. Eine derartige Ausgestaltung eines Halbleiterbauteils 22 ist in Fig. 4 gezeigt.

Bei dem in Fig. 4 dargestellten erfindungsgemäßen Halbleiterbauteil 22 ist ein Halbleiterchip 10' auf einem Träger 24 - beispielsweise einem Kartenkörper einer Chipkarte - angebracht. Der Halbleiterchip 10' weist ein Silizium-Substrat 12', eine in dem Substrat 12' ausgebildete integrierte Schaltung 14' und eine die integrierte Schaltung 14' abdeckende Schutzschicht 18' auf. In unterschiedlichen Ausgestaltungen kann der Halbleiterchip 10' entweder gemäß den oben beschriebenen Ausführungsbeispielen - also z.B. mit einer Licht streuenden Schutzschicht 18' - oder mit einer herkömmlichen Passivierungsschicht als Schutzschicht 18' ausgestaltet sein.

Auf der Schutzschicht 18' ist eine Antenne 26 angeordnet, deren Funktion unten noch genauer beschrieben wird. Eine Vergußmasse 28 umgibt den Halbleiterchip 10' und schützt ihn gegen Umwelteinflüsse und Angriffe, wie beispielsweise mechanische Manipulationsversuche oder Lichtangriffe. In Ausführungsalternativen kann die Antenne 26 auch zwischen zwei Lagen der Vergußmasse 28 eingebettet sein oder als Teil der Schaltungsstrukturen der integrierten Schaltung 14' ausgebildet sein.

Die Vergußmasse 28 besteht typischerweise aus einem anorganischen Material, das sich z.B. durch einen Ätzvorgang mit geeigneten chemischen Mitteln entfernen läßt. Hierdurch würde der von der Vergußmasse 28 geschützte Halbleiterchip 10' freigelegt und damit potentiellen Angriffen - z.B. Lichtangriffen - ausgesetzt werden.

Die hier beschriebenen Ausführungsbeispiele weisen daher einen Mechanismus auf, mit dem sich eine Manipulation der Vergußmasse 28 - z.B. deren vollständiges oder teilweises Abtragen - erkennen läßt. Hierzu enthält die Vergußmasse 28 eine Vielzahl von Partikeln, von denen in Fig. 4 einige mit dem Bezugszeichen 30 gezeigt sind. Die Partikel 30 sind so ausgestaltet, daß sie in Wechselwirkung mit einem von der Antenne 26 abgestrahlten Hochfrequenz-Wechselfeld treten können.

Beispielsweise können die Partikel 30 aus einem Material mit elektrischer und/ oder magnetischer Leitfähigkeit bestehen und eine an die Wellenlänge angepasste Größe aufweisen. In dem hier beschriebenen Ausführungsbeispiel sind die Partikel 30 dünne Metallfäden mit einer Länge im Bereich einiger Mikrometer. Bei der Herstellung des Halbleiterbauteils 22 werden diese Partikel 30 der flüssigen Vergußmasse 28 beigemengt, bevor die Vergußmasse 28 auf den Halbleiterchip 10' aufgetragen wird. In der ausgehärteten Vergußmasse 28 sind die Partikel 30 dann zufällig verteilt und zufällig orientiert.

Eine Überwachungsschaltung 32 ist in dem Halbleiterchip 10' als Teil der integrierten Schaltung 14' oder als davon getrennte Baugruppe ausgebildet. Wie in Fig. 5 gezeigt ist, weist die Überwachungsschaltung 32 einen Hochfrequenz-Oszillator 34 auf, der über eine Antennenleitung 36 mit der Antenne 26 verbunden ist. Eine als Teil der Überwachungsschaltung 32 ausgebildete Messeinrichtung 38 weist einen an die Antennenleitung 36 gekoppelten Richtkoppler 40, einen Gleichrichter 42 und einen Analog/ Digital-Wandler 44 auf.

Beim Betrieb der Überwachungsschaltung 32 erzeugt der Hochfrequenz-Oszillator 34 Frequenzen im Bereich von beispielsweise 10 GHz oder höher. In besonders einfachen Ausgestaltungen kann der Oszillator 34 auf eine einzige feste Frequenz eingestellt sein. Bevorzugt ist der Oszillator 34 jedoch ein frequenzvariabler Oszillator, der in einer Anzahl von Schritten - z.B. zwei oder vier oder sechzehn oder mehr Schritten - oder kontinuierlich abstimmbar ist. Das vom Oszillator 34 erzeugte Sendesignal wird über die Antennenleitung 36 in die Antenne 26 eingespeist. Es versteht sich, daß die Antenne 26 an den Frequenzbereich des Oszillators 34 angepasst ist (Impedanzanpassung).

Die Größe und Form der Partikel 30 ist so gewählt, daß die Partikel 30 im Frequenzbereich des Oszillators 34 in elektrische Resonanz geraten. In manchen Ausgestaltungen ist in die Vergußmasse 28 eine Mischung von Partikeln 30 unterschiedlicher Größen - z.B. unterschiedlicher Längen - eingebracht, so daß unterschiedliche Resonanzfrequenzen erzeugt werden und sich ein charakteristisches Ansprechverhalten auf unterschiedliche Oszillatorfrequenzen ergibt.

Durch die in den Partikeln 30 hervorgerufene Resonanz wird in die Antenne 26 Hochfrequenz-Leistung eingekoppelt, die von der Antenne 26 zur Antennenleitung 36 zurückläuft und dort vom Richtkoppler 40 ausgekoppelt wird. Die ausgekoppelte Rücklaufleistung wird vom Gleichrichter 42 in eine Gleichspannung umgewandelt. Diese Gleichspannung, die proportional zum Resonanzgrad in den Partikeln 30 ist, wird vom Analog/ Digital-Wandler 44 erfasst und in einen Digitalwert umgewandelt. Das so ermittelte Resonanzverhalten der Vergußmasse 28 stellt ein Merkmal des Halbleiterbauteils 22 dar, auf dessen Grundlage Manipulationen an der Vergußmasse 28 - insbesondere deren vollständiges oder teilweises Abtragen - erkannt werden können.

In vielen Ausgestaltungen besteht das Merkmal aus Kenndaten zum Resonanzverhalten der Vergußmasse 28 bei mehreren unterschiedlichen Anregungsfrequenzen. Beispielsweise kann zur Ermittlung des Merkmals vorgesehen sein, daß der Oszillator 34 einen vorgegebenen Frequenzbereich durchläuft, wobei der Oszillator 34 in mehreren diskreten Frequenzschritten stufenweise zwischen den einzelnen vorgesehenen Frequenzen umgeschaltet wird. Fig. 6 zeigt beispielhaft solche Frequenzschritte f₁, f₂, ..., f_{7.} Für jede dieser diskreten Messfrequenzen ermittelt die Messeinrichtung 38 auf die oben beschriebene Weise den Leistungsrückfluss von der Antenne 26. In dem Maße, wie einige oder alle der Partikel 30 bei einer bestimmten Messfrequenz in Resonanz geraten, wird auf Grund der von den Partikeln 30 reflektierten Leistung ein erhöhter Leistungsrückfluss von der Antenne 26 gemessen.

Durch die gerade beschriebene Messung bei mehreren Einzelfrequenzen ergibt sich ein komplexes Merkmal, wie es in Fig. 6 beispielhaft mit gemessenen Amplituden "a" gezeigt ist. Dieses komplexe Merkmal, das auch als "elektronischer Fingerabdruck" angesehen werden kann, ist für das konkrete Halbleiterbauteil 22 - insbesondere für die Anordnung der Vergußmasse 28 und die darin verteilten Partikel 30 - individuell und charakteristisch.

Die Überwachungsschaltung 32 führt selbsttätig oder gesteuert von dem Halbleiterchip 10' einen Überwachungsvorgang aus, bei dem dieses charakteristische Merkmal ermittelt und ausgewertet wird. Ähnlich wie bei den oben beschriebenen Ausgestaltungen gemäß Fig. 2 und Fig. 3 kann auch in den vorliegend beschriebenen Ausführungsbeispielen das Merkmal entweder nach einem vorab festgelegten, für alle Halbleiterbauteile einer Serie einheitlichen Verfahren oder durch einen Vergleich mit für das einzelne Halbleiterbauteil 22 individuellen Kenndaten ausgewertet werden. Der Überwachungsvorgang kann z.B. in vorbestimmten Zeitintervallen oder ansprechend auf vorbestimmte Ereignisse angestoßen werden.

In einer besonders einfachen Ausgestaltung wird lediglich überprüft, ob bei einer oder mehreren Frequenzen des Oszillators 34 eine Resonanz stattfindet, die einen oder mehrere fest vorgegebene/ n Grenzwert/e übersteigt. Hierdurch läßt sich zwar eine Entfernung der Vergußmasse 28 erkennen, nicht jedoch eine Manipulation, bei der die ursprüngliche Vergußmasse 28 durch eine andere Vergußmasse mit ähnlichen Eigenschaften ersetzt wird. Um die Überwachungsgenauigkeit zu verbessern, ist daher in manchen Ausgestaltungen vorgesehen, bei der Produktion des Halbleiterbauteils 22 eine Messreihe durchzuführen, bei der das individuelle Merkmal auf die oben beschriebene Weise ermittelt wird. Die gemessenen Werte können dann als individuelle Kenndaten in einen nichtflüchtigen Speicher des Halbleiterbauteils 22 eingetragen werden. Diese Kenndaten bilden einen Referenzwert für die Kombination von Halbleiterchip 10' und Vergußmasse 28.

In diesen Ausführungsformen wird dann bei dem während des Betriebs des Halbleiterbauteils 22 ausgeführten Überwachungsvorgang das individuelle Merkmal - beispielsweise das in Fig. 6 gezeigte Resonanzprofil - erneut ermittelt und mit den abgespeicherten Werten verglichen. In manchen Ausführungsformen wird hierbei nicht das vollständige Messspektrum durchlaufen, sondern es werden nur auf einigen - z.B. zufällig ausgewählten - Frequenzen Messungen durchgeführt.

Ergeben sich bei dem Vergleich der aktuellen Messwerte mit den gespeicherten Daten zu große Abweichungen, so wird eine Manipulation oder Beschädigung der Vergußmasse 28 angenommen. Die Überwachungsschaltung 32 aktiviert dann eine Sicherheitsfunktion des Halbleiterchip 10'. Wie bereits oben beschrieben, kann die Sicherheitsfunktion beispielsweise eine Unterbrechung oder einen Rücksetzvorgang auslösen oder ein gerade ausgeführtes Programm abbrechen oder den Programmfluss in eine Endlosschleife springen lassen.

Statt oder zusätzlich zu der gerade beschriebenen Nutzung des individuellen Merkmals zur Manipulationserkennung können die jeweils aktuell aus dem Resonanzprofil ermittelten Kenndaten zur eindeutigen Identifikation des Halbleiterbauteils 22 verwendet werden, wie dies oben bereits im Zusammenhang mit der Ausgestaltung gemäß Fig. 2 und Fig. 3 beschrieben wurde.

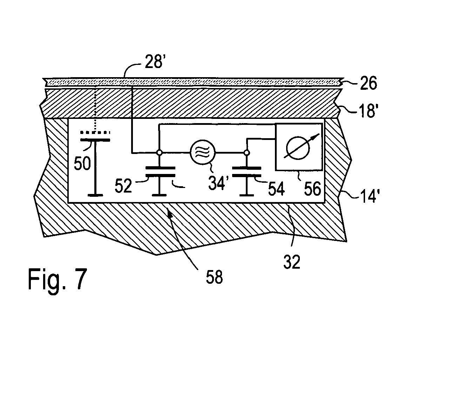

In einer vorteilhaften Weiterbildung der anhand Fig. 4 beschriebenen Ausführungsform wird die Vergußmasse 28' genutzt, um Angriffe auf das Halbleiterbauteil 22 zu erkennen. Die Weiterbildung kann in Kombination mit der vorbeschriebenen Ausführungsform oder auch einzeln eingesetzt werden. Fig. 7 veranschaulicht das Prinzip einer entsprechenden Überwachungsschaltung 58. Die Vergußmasse 28, die hier nur symbolisch und nicht maßstäblich als dünne Schicht angedeutet ist, ist hierbei über Durchkontaktierungen oder Durchbrüche in der Schutzschicht 18' mit der Überwachungsschaltung 58 verbunden. Die Überwachungsschaltung 58 bildet einen Teil der Schaltung 14 und ist in Form eines Schwingkreises ausgeführt, der im wesentlichen einen den Schwingkreis antreibenden Oszillator 34' sowie zwei gegen Masse geschaltete Kapazitäten 52 und 54 beinhaltet. Die über den Oszillator 34' abfallende analoge Spannung wird über Meßausgänge erfaßt und in einer Auswerteschaltung 56 in einen digitalen Wert umgesetzt. Parallel zu einer der Kapazitäten 52, 54 ist ferner als dritte Kapazität 50 die Vergußmasse 28 geschaltet. Sie besitzt im unversehrten Zustand eine charakteristische Kapazität. Mit einer Vergußmasse 28 im unversehrten Zustand schwingt der Schwingkreis mit einer Frequenz f_{S}, die eine Funktion der Kapazität 54 sowie der Summe der parallelgeschalteten Kapazitäten 52 und 50 ist. Wird nun die Vergußmasse 28 manipuliert, ändert sich der Wert für ihre charakteristische Kapazität und damit die Frequenz fs des Schwingkreises. Diese Änderung wird in der Auswerteschaltung 56 erkannt.

Es versteht sich, daß die hier beschriebenen Ausführungsformen und Ausführungsvarianten lediglich als Beispiele zu sehen sind. Weitere Abwandlungen und Kombinationen der hier beschriebenen Merkmale sind für den Fachmann unmittelbar ersichtlich. Dies betrifft insbesondere Kombinationen derjenigen Merkmale, die im vorliegenden Dokument in Zusammenhang mit unterschiedlichen Ausführungsbeispielen beschrieben worden sind.

## Patentansprüche

1. Halbleiterbauteil (22) mit:
- einem Halbleiterchip (10'),
- einer Antenne (26), und
- mindestens einer an die Antenne (26) angeschlossenen Überwachungsschaltung (32), die dazu eingerichtet ist, ein Hochfrequenz-Sendesignal zu erzeugen, **dadurch gekennzeichnet, dass** das Halbleiterbauteil (22) eine Vergußmasse (28) aufweist, die den Halbleiterchip (10') und/oder die Antenne (26) zumindest zum Teil umgibt, wobei die Vergußmasse (28) Partikel (30) aufweist, die dazu eingerichtet sind, bei einer Hochfrequenz-Einstrahlung in Resonanz zu geraten, und wobei die Überwachungsschaltung (32) dazu eingerichtet ist, die durch dieses Hochfrequenz-Sendesignal hervorgerufene Resonanz der Partikel (30) zu messen.

2. Halbleiterbauteil (22) nach Anspruch 1, **dadurch gekennzeichnet, daß** die Überwachungsschaltung (32) einen frequenzvariablen Hochfrequenz-Oszillator (34) und eine Messeinrichtung (38) für von der Antenne (26) aufgenommene Rücklaufleistung aufweist.

3. Halbleiterbauteil (22) nach Anspruch 1 oder 2, **dadurch gekennzeichnet, daß** der Halbleiterchip (10) aufweist:
- eine integrierte Schaltung (14), die Funktionen eines Prozessors und/ oder eines Speichers bereitstellt, und
- mindestens einen Lichtsensor (16.x), der dazu eingerichtet ist, einen Lichtangriff zu erkennen und ansprechend auf das Erkennen des Lichtangriffs eine Sicherheitsfunktion der integrierten Schaltung (14) zu aktivieren, wobei
- der Halbleiterchip (10) zumindest zum Teil durch eine Passivierungsschicht abgedeckt ist, die eine Schutzschicht (18) bildet, und wobei
- die Schutzschicht (18) als Diffusor für von außen in die Schutzschicht (18) einfallendes Licht (L) ausgebildet ist.

4. Halbleiterbauteil nach Anspruch 3, **dadurch gekennzeichnet, daß** die Wirkung der Schutzschicht (18) als Diffusor auf mindestens einem Element aus der Gruppe bestehend aus Streuung, Brechung, Beugung, Reflexion und Interferenz beruht.

5. Halbleiterbauteil nach Anspruch 3 oder Anspruch 4, **dadurch gekennzeichnet, daß** die Schutzschicht (18) Schutzschichtpartikel (20) aufweist, die dazu eingerichtet sind, das in die Schutzschicht (18) einfallende Licht (L) in unterschiedliche Richtungen abzulenken.

6. Halbleiterbauteil nach Anspruch 5, **dadurch gekennzeichnet, daß** die Schutzschichtpartikel (20) Nanopartikel und/ oder Glaspartikel sind.

7. Halbleiterbauteil nach einem der Ansprüche 3 bis 6, **dadurch gekennzeichnet, daß** der Halbleiterchip (10) mindestens eine Lichtquelle aufweist, die dazu eingerichtet ist, Licht in die Schutzschicht (18) einzustrahlen, und daß die Schutzschicht (18) dazu eingerichtet ist, das von der mindestens einen Lichtquelle in die Schutzschicht (18) eingestrahlte Licht zumindest zum Teil zu dem Lichtsensor bzw. mindestens einem der Lichtsensoren (16.x) zu leiten.

8. Halbleiterbauteil nach Anspruch 7, **dadurch gekennzeichnet, daß** der Halbleiterchip (10) mehrere Lichtsensoren (16.x) aufweist und dazu eingerichtet ist, ein Merkmal des Halbleiterchip (10) zu bestimmen, indem die Lichtquelle bzw. mindestens eine der Lichtquellen aktiviert wird/werden, die Lichteinstrahlung an den Lichtsensoren (16.x) bestimmt wird, und das Merkmal in Abhängigkeit von der Lichteinstrahlung an den Lichtsensoren (16.x) bestimmt wird.

9. Halbleiterbauteil nach Anspruch 8, **dadurch gekennzeichnet, daß** im Halbleiterchip (10) Kenndaten gespeichert sind, die durch ein zu einem früheren Zeitpunkt erfolgtes Aktivieren der Lichtquelle oder mindestens einer der Lichtquellen und Bestimmen der Lichteinstrahlung an den Lichtsensoren (16.x) ermittelt wurden.

10. Halbleiterbauteil nach einem der vorhergehenden Ansprüche, **dadurch gekennzeichnet, dass** die Vergußmasse (28) eine Mischung der Partikel (30) mit unterschiedlicher Größe, insbesondere unterschiedlicher Länge, ist, so dass unterschiedliche Resonanzfrequenzen erzeugt werden und sich ein charakteristisches Ansprechverhalten auf unterschiedliche Oszillatorfrequenzen ergibt.

11. Tragbarer Datenträger, insbesondere Chipkarte oder Chipmodul, mit einem Halbleiterbauteil (22) nach einem der Ansprüche 1 bis 10.

## Claims

1. A semiconductor component (22), comprising:
- a semiconductor chip (10'),
- an antenna (26), and
- at least one monitoring circuit (32), which is connected to the antenna (26) and configured for generating a high-frequency transmission signal, **characterised in that** the semiconductor component (22) comprises a sealing material (28) surrounding the semiconductor chip (10') and/or the antenna (26) at least partially, the sealing material (28) comprising particles (30) configured to resonate in the case of a high-frequency irradiation, and the monitoring circuit (32) being configured for measuring the resonance of the particles (30) caused by this high-frequency transmission signal.

2. The semiconductor component (22) according to claim 1, **characterised in that** the monitoring circuit (32) comprises a variable-frequency high-frequency oscillator (34) and a measuring device (38) for returned power received by the antenna (26).

3. The semiconductor component (22) according to claim 1 or claim 2, **characterised in that** the semiconductor chip (10) comprises:
- an integrated circuit (14) providing functions of a processor and/ or of a memory, and
- at least one light sensor (16.x) configured to recognize a light attack and activate a security function of the integrated circuit (14) in response to the recognition of the light attack, wherein
- the semiconductor chip (10) is at least partially covered by a passivation layer forming a protective layer (18), and wherein
- the protective layer (18) is configured as a diffuser for light (L) incident from outside into the protective layer (18).

4. The semiconductor component according to claim 3, **characterised in that** the action of the protective layer (18) as a diffuser is based on at least one element from the group consisting of scattering, refraction, diffraction, reflection and interference.

5. The semiconductor component according to claim 3 or claim 4, **characterised in that** the protective layer (18) comprises protective-layer particles (20) configured for deflecting into different directions the light (L) incident into the protective layer (18).

6. The semiconductor component according to claim 5, **characterised in that** the protective-layer particles (20) are nanoparticles and/ or glass particles.

7. The semiconductor component according to any one of claims 3 to 6, **characterised in that** the semiconductor chip (10) comprises at least one light source configured for radiating light into the protective layer (18), and that the protective layer (18) is configured for guiding at least partially the light radiated by the at least one light source into the protective layer (18) to the light sensor or at least one of the light sensors (16.x).

8. The semiconductor component according to claim 7, **characterised in that** the semiconductor chip (10) comprises a plurality of light sensors (16.x) and is configured for determining a feature of the semiconductor chip (10) by the light source or at least one of the light sources being activated, the light irradiation on the light sensors (16.x) being determined, and the feature being determined depending on the light irradiation on the light sensors (16.x).

9. The semiconductor component according to claim 8, **characterised in that** characteristic data are stored in the semiconductor chip (10), which were determined by means of an activation of the light source or at least one of the light sources that has taken place at an earlier point in time and by the determination of the light irradiation on the light sensors (16.x).

10. The semiconductor component according to any one of the preceding claims, **characterised in that** the sealing material (28) is a mixture of the particles (30) with different sizes, in particular different lengths, so that different resonant frequencies are generated and a characteristic response behaviour to different oscillator frequencies results.

11. A portable data carrier, in particular a chip card or chip module, comprising a semiconductor component (22) according to any one of claims 1 to 10.

## Revendications

1. Composant à semi-conducteurs (22) comportant :
- une puce semi-conductrice (10') ;
- une antenne (26) ; et
- au moins un circuit de surveillance (32) connecté à l'antenne (26) qui est conçu pour produire un signal d'émission à haute fréquence, **caractérisé par le fait que** le composant à semi-conducteurs (22) présente une masse coulée (28) qui enrobe au moins partiellement la puce semi-conductrice (10') et/ou l'antenne (26), la masse coulée (28) présentant des particules (30) qui sont conçues pour entrer en résonance en présence d'un rayonnement incident haute fréquence, et le circuit de surveillance (32) étant conçu pour mesurer la résonance des particules (30) qui est provoquée par ce signal d'émission haute fréquence.

2. Composant à semi-conducteurs (22) selon la revendication 1, **caractérisé par le fait que** le circuit de surveillance (32) comprend un oscillateur haute fréquence à fréquence variable (34) et un dispositif de mesure (38) pour la puissance de renvoi reçue par l'antenne (26).

3. Composant à semi-conducteurs (22) selon l'une des revendications 1 ou 2, **caractérisé par le fait que** la puce semi-conductrice (10) présente :
- un circuit intégré (14) qui assure les fonctions d'un processeur et/ou d'une mémoire ; et
- au moins un détecteur de lumière (16.x) qui est conçu pour détecter une attaque lumineuse et, en réponse à la détection de l'attaque lumineuse, activer une fonction de sécurité du circuit intégré (14) ;
- la puce semi-conductrice (10) étant au moins en partie recouverte d'une couche de passivation qui forme une couche protectrice (18) ; et
- la couche protectrice (18) étant formée en tant que diffuseur pour la lumière (L) qui entre de l'extérieur dans la couche protectrice (18).

4. Composant à semi-conducteurs selon la revendication 3, **caractérisé par le fait que** l'effet de la couche protectrice (18) en tant que diffuseur repose sur au moins un élément du groupe composé de la diffusion, de la réfraction, de la diffraction, de la réflexion et de l'interférence.

5. Composant à semi-conducteurs selon la revendication 3 ou la revendication 4, **caractérisé par le fait que** la couche protectrice (18) présente des particules de couche protectrice (20) qui sont disposées pour dévier dans différentes directions la lumière (L) qui entre dans la couche protectrice (18).

6. Composant à semi-conducteurs selon la revendication 5, **caractérisé par le fait que** les particules de couche protectrice (20) sont des nanoparticules et/ ou des particules de verre.

7. Composant à semi-conducteurs selon l'une des revendications 3 à 6, **caractérisé par le fait que** la puce semi-conductrice (10) présente au moins une source lumineuse qui est conçue pour projeter de la lumière dans la couche protectrice (18) et **par le fait que** la couche protectrice (18) est conçue pour envoyer au moins en partie au détecteur de lumière ou à au moins l'un des détecteurs de lumière (16.x) la lumière projetée dans la couche protectrice (18) par la ou les sources lumineuses.

8. Composant à semi-conducteurs selon la revendication 7, **caractérisé par le fait que** la puce semi-conductrice (10) présente plusieurs détecteurs de lumière (16.x) et est conçue pour déterminer une caractéristique de la puce semi-conductrice (10) en ce que la source lumineuse ou au moins l'une des sources lumineuses est activée, que le rayonnement lumineux incident est déterminé sur les détecteurs de lumière (16.x) et que la caractéristique est déterminée en fonction du rayonnement lumineux incident sur les détecteurs de lumière (16.x).

9. Composant à semi-conducteurs selon la revendication 8, **caractérisé par le fait que**, dans la puce semi-conductrice (10) sont mémorisées des données caractéristiques assignées qui ont été obtenues par une activation de la source lumineuse, ou d'au moins l'une des sources lumineuses, effectuée à un temps antérieur, et détermination du rayonnement lumineux incident sur les détecteurs de lumière (16.x).

10. Composant à semi-conducteurs selon l'une des revendications précédentes, **caractérisé par le fait que** la masse coulée (28) est un mélange des particules (30) de différentes tailles, en particulier de différentes longueurs, de sorte qu'il s'établit différentes fréquences de résonance et que l'on obtient un comportement de réponse caractéristique sur différentes fréquences de l'oscillateur.

11. Support de données portatif, en particulier carte à puce ou module de puce, comportant un composant à semi-conducteurs (22) selon l'une des revendications 1 à 10.
